# FASCICULE DE BREVET EUROPEEN

(11) **EP 3 113 967 B1**
(45) Date de publication et mention de la délivrance du brevet: **04.11.2020**
(21) Numéro de dépôt: 15705685.4
(22) Date de dépôt: 04.02.2015
(51) Int. Cl.: B60K 17/10

(54) **MODULE HYDRAULIQUE INTEGRE DANS UNE TRANSMISSION POUR VEHICULE AUTOMOBILE A PROPULSION HYDRAULIQUE**
IN EIN GETRIEBE FÜR EIN HYDRAULISCH ANGETRIEBENES KRAFTFAHRZEUG INTEGRIERTES HYDRAULIKMODUL
HYDRAULIC MODULE INCORPORATED INTO A TRANSMISSION FOR A HYDRAULICALLY POWERED MOTOR VEHICLE

(30) Priorité: 07.03.2014 FR 1451868
(43) Date de publication de la demande: 11.01.2017
(73) Titulaire: Renault S.A.S., 92100 Boulogne-Billancourt (FR)
(72) Inventeur: EJARQUE, Pascal, F-78370 Plaisir (FR); LASSEUR, Bertrand, F-92370 Chaville (FR); FORGEOUX, Eric, F-78760 Jouars Pontchartrain (FR)
(86) Numéro de dépôt international: PCT/FR2015/050255
(87) Numéro de publication internationale: WO 2015/132488

(56) Documents cités:
- WO-A1-2014/048838
- DE-A1- 19 823 508
- US-A- 5 162 024
- US-A- 6 129 169

## Description

La présente invention concerne le domaine des véhicules automobiles à propulsion hydraulique comprenant un module hydraulique. Dans un véhicule automobile à propulsion hydraulique, la boite de vitesses classique est remplacée ou complétée par un circuit hydraulique fermé.

De tels véhicules automobiles comportent généralement une source d'énergie rotative, par exemple un moteur thermique ou électrique, destinée à entrainer une ou plusieurs machines hydrauliques du module hydraulique. Les machines hydrauliques sont reliées aux roues du véhicule et peuvent fonctionner en mode pompe afin de recharger des accumulateurs de pression hydraulique permettant de stocker l'énergie hydraulique en transformant l'énergie mécanique en énergie hydraulique. Les machines hydrauliques peuvent également fonctionner en mode moteur afin de restituer l'énergie hydraulique stockée et donc une puissance motrice aux roues du véhicule. Ainsi, les moteurs hydrauliques transforment l'énergie hydraulique en énergie mécanique.

Les machines hydrauliques utilisées peuvent être du type volumétriques, de préférence à cylindrée variable, de haute précision afin d'ajuster les niveaux de couple et de puissance qui sont délivrés ou absorbés.

Cette utilisation d'énergie hydraulique stockée permet d'optimiser le fonctionnement du moteur thermique et de réduire sa consommation ainsi que les émissions de gaz polluants. En effet, le stockage d'énergie hydraulique permet au véhicule automobile de n'utiliser que la source d'énergie hydraulique comme moyen de propulsion.

On connaît plusieurs types d'architecture pour des transmissions hybrides hydrauliques tels que les transmissions de type « parallèle » dans lequel le système hydraulique vient se greffer sur la transmission classique du véhicule afin d'optimiser le système initial ; les transmissions de type « série » dans lesquelles le moteur thermique entraine une pompe hydraulique et les transmissions de type « dérivation » qui est une architecteur mixte.

On connait également différents types de pompes ou moteurs hydrauliques couplés à ces différentes architectures de transmission hydraulique. La pompe hydraulique utilisée pour de telles transmissions, est généralement une pompe volumétrique à pistons, notamment des pompes à pistons axiaux en ligne avec un barillet tournant.

On connait également les documents WO2014/048838-A1 et US6,129,169-A qui décrivent des modules hydrauliques.

Dans une pompe volumétrique, le fluide est isolé dans une chambre à volume variable pour être transféré de la zone d'aspiration (basse pression) vers la zone de refoulement (haute pression). Ce type de pompe est dit « volumétrique » car elle véhicule un volume de fluide à chaque tour de fonctionnement ; ce volume par tour de fonctionnement étant appelé « cylindrée ».

Généralement, pour les pressions hydrauliques élevées, telles que supérieures à 300 bars, on utilise les pompes à pistons axiaux de type à patins ou à rotules pour les axes brisés ou des pompes à pistons radiaux sur galet.

Dans le cadre d'une transmission hydraulique, l'entraînement d'un différentiel de pont avec un moteur hydraulique nécessite l'encombrement d'un différentiel et d'un ou deux moteurs hydrauliques.

Il est connu de greffer ces composants hydrauliques sur le boîtier des différentiels avant (pour les tractions avant), arrière (pour les propulsions) et avant et/ou arrière et/ou central pour les véhicules tout terrain à quatre roues motrices. Ces solutions sont technologiquement pratiques mais prennent beaucoup de place dans le compartiment moteur et dans le soubassement arrière, ce qui rend leur l'implantation difficile.

De plus, il existe un besoin pour réduire les coûts de fabrication, le poids engendré par un tel module hydraulique ainsi que les émissions acoustiques du module hydraulique.

L'objectif de l'invention est donc de pallier ces inconvénients et d'optimiser l'intégration d'un module hydraulique dans une transmission de véhicule automobile.

L'objet de l'invention est donc de fournir un module hydraulique compact présentant une architecture simplifiée et facile à implanter dans un véhicule automobile.

L'invention a également pour objet une transmission pour véhicule automobile comprenant un tel module hydraulique compact.

Dans un mode de réalisation, l'invention concerne un module hydraulique destiné à fournir une puissance motrice à un véhicule automobile à propulsion hydraulique comprenant une transmission comportant un carter à l'intérieur duquel est logé un différentiel de pont dont les arbres de sorties sont couplés aux roues motrices dudit véhicule automobile.

Le module hydraulique comprend un corps de pompe fixé au carter de la transmission et dans lequel est logé un unique moteur hydraulique comportant un distributeur hydraulique, un barillet, une came de pompe fixée au carter du différentiel de pont et une pluralité de pistons radiaux en contact par une de leur extrémité à la surface interne de la came de pompe et destinés chacun à coulisser à l'intérieur d'un des cylindres du barillet. Lesdits cylindres du barillet étant en communication fluidique avec le distributeur hydraulique pour le passage d'un fluide en mode aspiration ou en mode refoulement du moteur hydraulique.

Le moteur hydraulique convertit l'énergie provenant d'un fluide sous pression en énergie mécanique sous la forme d'un couple entraînant le différentiel de pont dont les arbres de sortie sont couplés aux roues motrices du véhicule.

Ainsi, le module hydraulique se trouve directement intégré dans le carter de la transmission et utilise certains composants du différentiel de pont, ce qui permet de réduire le nombre de pièces du module hydraulique et par conséquent son poids ainsi que son coût. Cette intégration à l'intérieur de la transmission permet également de diminuer fortement les nuisances sonores lors du fonctionnement du module hydraulique.

L'utilisation de certains composants du différentiel de pont permet également de réduire le nombre de moteur hydraulique nécessaire à un unique moteur hydraulique.

Avantageusement, le distributeur hydraulique est fixé sur le carter du différentiel de pont et tourne avec celui-ci.

La surface interne de la came de pompe peut présenter une forme ondulée.

Dans un mode de réalisation, la came de pompe est entrainée en rotation par la couronne du différentiel de pont.

La surface cylindrique interne de la couronne de pont est, par exemple, solidaire de la surface cylindrique externe de la came de pompe.

Dans un autre mode de réalisation, la came de pompe et la couronne du différentiel de pont forment une seule pièce. Ainsi, on réduit davantage le nombre de pièces du module hydraulique en se servant de la couronne du différentiel de pont comme piste de came de pompe pour les pistons radiaux.

Dans un mode de réalisation, la direction des flux du fluide hydraulique s'inverse lorsque le sens de rotation du différentiel de pont est inversé.

Selon un deuxième aspect, l'invention concerne une transmission pour véhicule automobile à propulsion hydraulique comprenant un module hydraulique tel que décrit précédemment.

Selon un troisième aspect, l'invention concerne un véhicule automobile comprenant transmission telle que décrite précédemment et une source d'énergie mécanique destinée à entrainer le module hydraulique de la transmission.

Avantageusement, le véhicule automobile comprend des accumulateurs de pression destinés à accumuler la pression hydraulique fournie par le module hydraulique.

Le véhicule automobile comprend, par exemple, quatre roues motrices.

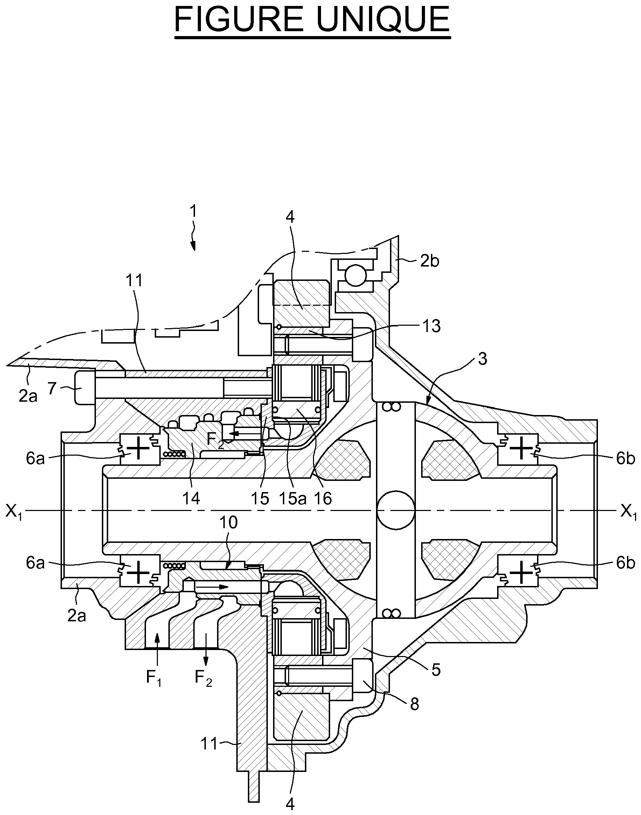

D'autres buts, caractéristiques et avantages de l'invention apparaîtront à la lecture de la description suivante, donnée uniquement à titre d'exemple non limitatif, et faite en référence à la figure unique représentant schématiquement une partie de l'architecture d'une transmission intégrant un module hydraulique selon l'invention.

Telle qu'illustrée sur la figure, une partie d'une transmission, référencée 1 dans son ensemble, est destinée à être intégrée dans un véhicule automobile (non représenté). Le véhicule automobile peut être, par exemple, du type à propulsion thermique, ou à propulsion hybride comprenant un moteur thermique d'entrainement et une machine électrique.

La transmission 1 du véhicule automobile comporte un premier carter 2a dans lequel sont logées les différentes lignes primaire et secondaires (non représentées) et les différents engrenages associés (non représentés) et un deuxième carter 2b disposé du côté du système de filtration (non représenté), tel que par exemple un moyeu amortisseur, double volant ou tout autre moyen approprié, au volant d'inertie du moteur thermique. Le premier et deuxième carter 2a, 2b sont reliés l'un à l'autre.

Tel qu'illustré, la transmission 1 comprend un différentiel de pont 3, d'axe X₁-X₁ intégré à l'intérieur des carters 2a, 2b. Le différentiel de pont 3 comprend une couronne de pont 4 entrainée en rotation par le couple d'un moteur ou des deux moteurs. Le différentiel de pont 3 comprend des arbres de sortie (non représentés) couplés aux roues motrices (non représentées) du véhicule afin de les entrainer en rotation.

Le différentiel de pont 3 comporte un boitier de différentiel 5 monté à rotation dans les carters 2a, 2b de la transmission par l'intermédiaire de roulements 6a, 6b. La couronne de pont 4 est fixée sur le carter de différentiel 5.

La transmission 1 du véhicule automobile ne sera pas davantage détaillée dans la suite de la description.

Tel qu'illustré, un module hydraulique 10, ou chaine de traction ou propulsion hydraulique, est intégré à l'intérieur de la transmission 1.

Le module hydraulique comprend un corps de pompe 11 fixé aux carters 2a, 2b de la transmission 1 par des moyens de fixation 7, tels que par exemple des vis, et dans lequel est logé un unique moteur hydraulique 12 d'axe X₁-X₁. Le corps de pompe 11 est donc fixe. Le moteur hydraulique 12 convertit l'énergie provenant d'un fluide sous pression, en énergie mécanique sous la forme d'un couple entraînant le différentiel de pont 3.

Le moteur hydraulique 12 comprend une came de pompe 13 fixée au carter du différentiel 5 par des moyens de fixation 8, tels que par exemple des vis, et disposée en-dessous de la couronne de pont 4. La came de pompe 13 présente une forme de bague annulaire entourée par la couronne de pont 4. La came de pompe 13 est entrainée en rotation par la couronne 4 du différentiel de pont 3. En d'autres termes, la surface cylindrique interne (non référencée) de la couronne de pont 3 est solidaire de la surface externe (non référencée) de la came de pompe 13. La surface interne (non référencée) de la came de pompe 13 présente une forme ondulée.

Le moteur hydraulique 12 comprend en outre un distributeur hydraulique 14, un barillet 15 et des pistons radiaux 16 en contact par une de leur extrémité à la surface interne de la came de pompe 13 et destinés à coulisser à l'intérieur des cylindres 15a du barillet 15. Ainsi, les pistons radiaux 16 sont actionnés par la came de pompe 13, notamment par la forme particulière de la surface interne de la came de pompe 13.

En variante, on pourrait prévoir que la couronne 4 du différentiel de pont 3 et la came de pompe 13 soit une unique pièce, afin de réduire davantage le nombre de pièces du module hydraulique.

Le distributeur hydraulique 14 est monté dans le corps de pompe 11 et fixé sur le carter 5 du différentiel de pont 3 afin de tourner avec celui-ci. Le distributeur hydraulique 14 est en appui axial contre le barillet 15. Le barillet 15 comporte une pluralité de cylindres 15a associés chacun à un piston radial 16.

Une extrémité des cylindres 15a est en communication fluidique avec le distributeur hydraulique pour le passage de fluide en mode aspiration ou en mode refoulement du moteur hydraulique 12. Le flux d'écoulement du fluide dans le mode aspiration est représenté par la flèche F₁ et le flux d'écoulement du fluide dans le mode refoulement est représenté par a flèche F₂. La direction des flux F₁, F₂ du fluide s'inverse lorsque le sens de rotation du différentiel de pont 3 est inversé.

Le module hydraulique 10, relié aux roues du véhicule, peut donc fonctionner en mode pompe afin de recharger des accumulateurs de pression hydraulique (non représentés) en transformant l'énergie mécanique en énergie hydraulique, en stockant l'énergie hydraulique. Le module hydraulique 10 peut également fonctionner en mode moteur afin de restituer l'énergie hydraulique stockée et donc une puissance motrice aux roues du véhicule, en transformant l'énergie hydraulique en énergie mécanique.

Tel qu'illustré le module hydraulique 10 est implanté à gauche du différentiel de pont 3. On notera que le module hydraulique pourrait être implanté à droite du différentiel de pont. Dans ce cas, le corps de pompe 11 serait fixé au carter 2b de la transmission.

Grace à l'invention, le module hydraulique 10 est intégré dans la transmission 1, et est couplé avec certains composants du différentiel de pont 3 afin de minimiser le nombre de pièces et donc de réduire les coûts de fabrication et le poids.

De plus, le module hydraulique étant disposé à l'intérieur de la transmission, les nuisances sonores lors du fonctionnement se trouvent par conséquent réduites.

L'invention s'applique à tout type de véhicule automobile comprenant un différentiel de pont, tel que par exemple les véhicules à quatre roues motrices.

## Revendications

1. Module hydraulique destiné à fournir une puissance motrice à un véhicule automobile comprenant une transmission (1) comportant un carter (2a, 2b) à l'intérieur duquel est logé un différentiel de pont (3) dont les arbres de sorties sont couplés aux roues motrices dudit véhicule automobile, **caractérisé en ce qu'**il comprend un corps de pompe (11) fixé au carter (2a, 2b) de la transmission (1) et dans lequel est logé un unique moteur hydraulique (12) comportant un distributeur hydraulique (14), un barillet (15), une came de pompe (13) entourée par une couronne de pont (4) fixée au carter (5) du différentiel de pont (3) et une pluralité de pistons radiaux (16) en contact par une de leur extrémité à la surface interne de la came de pompe (13) et destinés chacun à coulisser à l'intérieur d'un des cylindres (15a) du barillet (15), lesdits cylindres (15a) du barillet (15) étant en communication fluidique avec le distributeur hydraulique (14) pour le passage d'un fluide en mode aspiration (F₁) ou en mode refoulement (F₂) du moteur hydraulique (12).

2. Module hydraulique selon la revendication 1, dans lequel le distributeur hydraulique (14) est fixé sur le carter (5) du différentiel de pont (3) et tourne avec celui-ci.

3. Module hydraulique selon l'une quelconque des revendications précédentes, dans lequel la surface interne de la came de pompe (13) présente une forme ondulée.

4. Module hydraulique selon l'une quelconque des revendications précédentes, dans lequel la came de pompe (13) est entrainée en rotation par la couronne (4) du différentiel de pont (3).

5. Module hydraulique selon la revendication 4, dans lequel la surface cylindrique interne de la couronne de pont (3) est solidaire de la surface cylindrique externe de la came de pompe (13).

6. Module hydraulique selon l'une quelconque des revendications 1 à 3, dans lequel la came de pompe (13) et la couronne (4) du différentiel de pont (3) forment une unique pièce.

7. Module hydraulique selon l'une quelconque des revendications précédentes, dans lequel la direction des flux (F₁, F₂) de fluide s'inverse lorsque le sens de rotation du différentiel de pont (3) est inversé.

8. Transmission pour véhicule automobile comprenant un module hydraulique (10) selon l'une quelconque des revendications précédentes.

9. Véhicule automobile comprenant une transmission (1) selon la revendication 8 et une source d'énergie mécanique destinée à entrainer le module hydraulique de la transmission.

10. Véhicule automobile selon la revendication 9, dans lequel le véhicule automobile comprend des accumulateurs de pression destinés à accumuler la pression hydraulique fournie par le module hydraulique (10).

## Patentansprüche

1. Hydraulikmodul, welches dazu bestimmt ist, eine Antriebsleistung für ein Kraftfahrzeug bereitzustellen, welches ein Getriebe (1) umfasst, das ein Gehäuse (2a, 2b) aufweist, in dessen Innerem ein Achsdifferential (3) untergebracht ist, dessen Abtriebswellen mit den Antriebsrädern des Kraftfahrzeugs gekoppelt sind, **dadurch gekennzeichnet, dass** es ein Pumpengehäuse (11) umfasst, das am Gehäuse (2a, 2b) des Getriebes (1) befestigt ist und in dem ein einziger Hydraulikmotor (12) untergebracht ist, der einen Hydraulikverteiler (14), eine Trommel (15), einen von einem Achszahnkranz (4) umgebenen Pumpnocken (13), der am Gehäuse (5) des Achsdifferentials (3) befestigt ist, und mehrere Radialkolben (16), die sich mit einem ihrer Enden mit der Innenfläche des Pumpnockens (13) in Kontakt befinden und jeweils dazu bestimmt sind, im Inneren eines der Zylinder (15a) der Trommel (15) zu gleiten, aufweist, wobei die Zylinder (15a) der Trommel (15) für den Durchfluss eines Fluids im Ansaugbetrieb (F₁) oder im Förderbetrieb (F₂) des Hydraulikmotors (12) in Fluidverbindung mit dem Hydraulikverteiler (14) stehen.

2. Hydraulikmodul nach Anspruch 1, wobei der Hydraulikverteiler (14) am Gehäuse (5) des Achsdifferentials (3) befestigt ist und sich mit diesem dreht.

3. Hydraulikmodul nach einem der vorhergehenden Ansprüche, wobei die Innenfläche des Pumpnockens (13) eine gewellte Form aufweist.

4. Hydraulikmodul nach einem der vorhergehenden Ansprüche, wobei der Pumpnocken (13) von dem Zahnkranz (4) des Achsdifferentials (3) drehend angetrieben wird.

5. Hydraulikmodul nach Anspruch 4, wobei die zylindrische Innenfläche des Achszahnkranzes (3) mit der zylindrischen Außenfläche des Pumpnockens (13) fest verbunden ist.

6. Hydraulikmodul nach einem der Ansprüche 1 bis 3, wobei der Pumpnocken (13) und der Zahnkranz (4) des Achsdifferentials (3) ein einziges Teil bilden.

7. Hydraulikmodul nach einem der vorhergehenden Ansprüche, wobei sich die Richtung der Fluidströme (F₁, F₂) umkehrt, wenn die Drehrichtung des Achsdifferentials (3) umgekehrt wird.

8. Getriebe für ein Kraftfahrzeug, welches ein Hydraulikmodul (10) nach einem der vorhergehenden Ansprüche umfasst.

9. Kraftfahrzeug, welches ein Getriebe (1) nach Anspruch 8 und eine mechanische Energiequelle, die dazu bestimmt ist, das Hydraulikmodul des Getriebes anzutreiben, umfasst.

10. Kraftfahrzeug nach Anspruch 9, wobei das Kraftfahrzeug Druckspeicher umfasst, die dazu bestimmt sind, den von dem Hydraulikmodul (10) gelieferten Hydraulikdruck zu speichern.

## Claims

1. Hydraulic module intended to provide motive power to a motor vehicle comprising a transmission (1) with a casing (2a, 2b) containing an axle differential (3), the output shafts of which are coupled to the drive wheels of said motor vehicle, **characterized in that** it comprises a pump body (11) fixed to the casing (2a, 2b) of the transmission (1) and accommodating a single hydraulic motor (12) comprising a hydraulic distributor (14), a barrel (15), a pump cam (13) surrounded by an axle crown wheel (4) fixed to the casing (5) of the axle differential (3), and a plurality of radial pistons (16) in contact via one of their ends with the inner surface of the pump cam (13) and each intended to slide inside one of the cylinders (15a) of the barrel (15), said cylinders (15a) of the barrel (15) being in fluidic communication with the hydraulic distributor (14) for passage of a fluid in intake mode (F₁) or in delivery mode (F₂) of the hydraulic motor (12).

2. Hydraulic module according to Claim 1, wherein the hydraulic distributor (14) is fixed to the casing (5) of the axle differential (3) and rotates therewith.

3. Hydraulic module according to any of the preceding claims, wherein the inner surface of the pump cam (13) has an undulating form.

4. Hydraulic module according to any of the preceding claims, wherein the pump cam (13) is driven in rotation by the crown wheel (4) of the axle differential (3).

5. Hydraulic module according to Claim 4, wherein the inner cylindrical surface of the axle crown wheel (3) is integral with the outer cylindrical surface of the pump cam (13).

6. Hydraulic module according to any of Claims 1 - 3, wherein the pump cam (13) and the crown wheel (4) of the axle differential (3) form a single piece.

7. Hydraulic module according to any of the preceding claims, wherein the flow direction (F₁, F₂) of the fluid is reversed when the rotation direction of the axle differential (3) is reversed.

8. Transmission for a motor vehicle comprising a hydraulic module (10) according to any of the preceding claims.

9. Motor vehicle comprising a transmission (1) according to Claim 8, and a source of mechanical energy intended to drive the hydraulic module of the transmission.

10. Motor vehicle according to Claim 9, wherein the motor vehicle comprises pressure accumulators intended to accumulate the hydraulic pressure supplied by the hydraulic module (10).
